# Europäisches Patentamt
# European Patent Office
# Office européen des brevets

(11) Veröffentlichungsnummer: **0 151 669**
**B1**

(12) **EUROPÄISCHE PATENTSCHRIFT**

(45) Veröffentlichungstag der Patentschrift:
04.01.89

(21) Anmeldenummer: **84104701.2**

(22) Anmeldetag: **26.04.84**

(51) Int. Cl.⁴: **C 04 B 14/06,** C 04 B 18/02

(54) **Verwendung von pelletiertem Sand als Zuschlagstoff für Beton.**

(30) Priorität: **27.04.83 DE 3315206**

(43) Veröffentlichungstag der Anmeldung:
**21.08.85 Patentblatt 85/34**

(45) Bekanntmachung des Hinweises auf die Patenterteilung:
**04.01.89 Patentblatt 89/1**

(84) Benannte Vertragsstaaten:
**FR NL**

(73) Patentinhaber: **Salomon, Dieter, Wickeder Strasse 51, D-5758 Fröndenberg- Warmen (DE)**

(72) Erfinder: **Salomon, Dieter, Wickeder Strasse 51, D-5758 Fröndenberg- Warmen (DE)**

(56) Entgegenhaltungen:
**EP-A-0 069 095**
**DE-A-2 110 498**
**US-A-3 227 569**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft die Verwendung von Pellets, welche aus Sand hergestellt werden, als Beton-Zuschlag gem. DIN 4226 (anstelle von Kies und Splitt).

Zur Herstellung von Beton wird Zement, Wasser, Sand und Körnung benötigt. Sand + Körnung sind gem. DIN 4226 Zuschläge. Zuschläge können nach DIN 4226 Natur- oder Kunstprodukte sein. Sand ist ein Naturprodukt mit großer Spannbreite im Feinstkornbereich (Mehlkorn). Da Sande von einem bestimmten Mehlkornanteil nicht mehr verwendbar sind, werden selbige deponiert. Hinzu kommt, daß wir Sand im Übermaß haben, Kies im Verhältnis jedoch wenig. In manchen Gegenden sind ausschließlich Sandvorkommen. Kies wird aus großen Entfernungen herbeigefahren. Pelletiert man Sand, so erhält man Kugeln, die anstelle von Kieskörnern dem Betonproduktion zugeführt werden.

Die DIN 4226 behandelt und gliedert Zuschlagstoffe für die Betonproduktion. Sie unterscheidet zwischen Natur- und Kunstzuschlag. Sand, Kies und Splitt sind Naturzuschläge. Diese vorgenannten Zuschläge können zu Normalbeton verarbeitet werden. Weiter gibt es Leichtzuschläge für Leichtbeton und Schwerzuschläge für Schwerbeton. Entscheidend ist stets das Gewicht je Raumeinheit des Betons, welches maßgeblich durch das Gewicht der Zuschläge beeinflußt wird.

Sandpellets können als Normalzuschlag verarbeitet werden.

Der Erfindung liegt in erster Linie die Aufgabe zu Grunde, ein nicht verwertbares Naturprodukt aufzubereiten und brauchbar zu machen. Außerdem soll ein Naturprodukt (Kies), welches in absehbarer Zeit wegen geringer Vorkommen knapp wird, eingespart werden.

Zur Lösung dieser Aufgabe wird Sand mit Hilfe einer Flüssigkeit und ggfs. eines Bindemittels pelletiert und die Pellets werden als Zuschlag für Beton anstelle von Kies oder Splitt verwendet.

Zur Herstellung der Pellets wird der Sand auf seine Betonzuschlagseignung hin nach DIN 1045 untersucht. Nach Feststellung der Sieblinie (Korngrößenverteilung) wird ein Pelletierrezept hinsichtlich Wasseranteil und gegebenenfalls Bindemittelzusatz und -art aufgestellt. Auf diese Weise wird ein nicht verwertbares Material nutzbar gemacht und ein beschränkt verfügbares Naturprodukt eingespart. Ein Beton mit den runden Pellets als Zuschlag läßt sich besser verarbeiten. Ein glattes, rundes Korn hat eine spezifisch kleinere Oberfläche. Dadurch wird zum Verkleben der Körner untereinander eine geringere Menge Zementleim benötigt.

Bei gleichem Zementgehalt bedeutet dies einen besseren Korrosionsschutz, wodurch Bauschäden vermieden werden. Pelletiermaschinen können nachts laufen. Damit erfolgt eine bessere Ausnutzung der Stromüberkapazität in der Nacht.

Die Herstellung von Pellets aus $SiO_2$ und Wasser ist aus der US-A-4 336 219 bekannt. Die Verwendung derartiger Pellets als Zuschlag für Beton ist in dieser Schrift nicht angesprochen.

### Beispiel:

Ein Beton B 10 K 1 (gem. DIN 1045) hat nachstehendes Rezept:

145 kg Hochofenzement 35L
35 kg Füller
125 l Wasser
810 kg Sand 0/2 mm
700 kg Sandpellets 2/8 mm
535 kg Sandpellets 8/16 mm

### Patentanspruch

Verwendung von Pellets, die auf Sand mit Hilfe einer Flüssigkeit und ggfs. eines Bindemittels hergestellt sind, als Zuschlag für Beton anstelle von Kiel oder Sand.

### Claim

Use of pellets manufactured from sand with the aid of fluid and if necessary a binding agent as an aggregate for concrete instead of gravel or sand.

### Revendication

Utilisation de boulettes, qui sont fabriquées avec du sable à l'aide d'un liquide et éventuellement d'un liant, comme additif pour beton à la place de gravier ou de sable.